# EUROPEAN PATENT APPLICATION

(11) **EP 0 634 258 A1**
(43) Date of publication of application: **18.01.1995**
(21) Application number: 94201719.5
(22) Date of filing: 15.06.1994
(51) Int. Cl.: B29B 17/00, C08L 23/12, B29K 23/00, B29K 29/00, B29K 103/06, B29L 31/10

(54) **Method of producing material based on recycled plastic and the obtained material**

(30) Priority: 13.07.1993 BE 9300726; 12.10.1993 NL 9301760
(71) Applicant: B.M.P. HOLDING B.V., NL-7231 AD Warnsveld (NL)
(72) Inventor: de Wilde, Henri Diederik, NL-7231 AD Warnsveld (NL)
(74) Representative: Prins, Hendrik Willem

(57) **Abstract**

The present invention relates to a method for manufacturing from recycled plastic a base material based on polystyrene or polypropylene, comprising of:
i)
   reducing recycled plastic based on polystyrene or polypropylene, which contains 0.1-10 % by weight of ethylenevinylalcohol copolymer (EVOH), to an average particle size smaller than 5 mm;
ii)
   drying the reduced plastic;
iii)
   extruding and degassing the dried, reduced plastic; and
iv)
   moulding to the base material with a wall thickness smaller than 15 mm;
and to the manufactured base material having as composition:
a)
   i)
      0.1-10% by weight of ethylenevinylalcohol copolymer (EVOH);
   ii)
      0-10% by weight of thermoplastic polyester;
   iii)
      0-30% by weight of polyethylene; and
   iv)
      0-5% by weight of metal particles with an average particle size smaller than 5 mm; and
b) a wall thickness smaller than 15 mm.

## Description

The present invention relates to a method for manufacturing a base material from recycled plastic, in particular a plastic based on polystyrene or polypropylene which, to obtain a low gas permeability, contains a layer of a copolymer of ethylene and vinyl alcohol, and is therefore applied as foil in the packaging industry. The present invention further relates to a manufactured base material from such a recycled plastic, which base material is of great practical value because the dimensions of the base material lie within narrow tolerances, for example within a tolerance of ± 0.5 mm, in particular 0.2 mm for the wall thickness.

When using foils based on polystyrene or polypropylene which contain a gas-tight layer of ethylenevinylalcohol copolymer (EVOH), a relatively large amount of waste, for example up to 20-40% of the starting material, remains after punching out the desired part of the packaging material. This waste can no longer be used in the packaging industry, and yet this foil provided with punch holes is per se no longer usable.

The present invention has for its object to find a new application for the above described recycled plastic in the form of a base material.

This is achieved according to the invention in that a method is provided for manufacturing from recycled plastic a base material based on polystyrene or polypropylene, comprising of:
i)
   reducing recycled plastic based on polystyrene or polypropylene, which contains 0.1-10 % by weight of ethylenevinylalcohol copolymer (EVOH), to an average particle size smaller than 5 mm;
ii)
   drying the reduced plastic;
iii)
   extruding and degassing the dried, reduced plastic; and
iv)
   moulding to the base material with a wall thickness smaller than 15 mm.

Research has shown that if the foil-like plastic waste is reduced by grinding or extrusion to a size of the particles or granules smaller than 5 mm, preferably smaller than 4 mm, a good homogeneity is obtained for the first time when the reduced plastic material is thereafter melted in an extruder. However, reduction to below a maximum average particle size is not sufficient to obtain a base material of the above described requirements. It has been found namely that through the use of an EVOH layer in the plastic foil moisture accumulates at the level of the EVOH layer and that this moisture has to be removed prior to extrusion. The drying can only be omitted if the plastic foil which still has to be processed in the packaging material has already been dried sufficiently and has not been able to absorb any moisture thereafter. In general however it is necessary for the reduced, recycled plastic to be subjected to the drying treatment in for example a drying tunnel, at a temperature of approximately 70°C.

Extrusion can only produce a satisfactory base material if the extruder is provided with a gas outlet through which degassing is possible.

Finally, the moulding must be performed such that the base material has a wall thickness smaller than 15 mm, since at larger wall thicknesses there is insufficient rigidity of form, the surface has insufficient evenness and the above desired tolerance for the dimensions of the base material cannot be realized.

For particular applications the above described plastic also contains a metal foil layer on at least one of its outer layers, which metal foil layer is often used for printing product information. Such a metal foil generally interferes with re-use. It has been found however that if such a metal layer-containing plastic is reduced to the above described average particle size and admixed in an amount smaller than 50% by weight, after extrusion and moulding the metal particles are present in non-homogeneous distribution in the matrix of base material and do not interfere with the properties. A base material with optimum properties is obtained when in further preference the amount of admixed plastic containing metal particles only amounts to 40% by weight, more preferably to only 30% by weight.

The base material can take the form of a construction board, a rod or a tube. The tubular base material has a very advantageous application as winding core for expansion shafts on which sheet-form material is wound, such as paper, carpet and the like.

The present invention also relates to a base material of recycled plastic based on polystyrene or polypropylene, which contains:
a) a composition of:
   i)
      0.1-10% by weight of ethylenevinylalcohol copolymer (EVOH);
   ii)
      0-10% by weight of thermoplastic polyester;
   iii)
      0-30% by weight of polyethylene; and
   iv)
      0-5% by weight of metal particles with an average particle size smaller than 5 mm; and
b) a wall thickness smaller than 15 mm.

Polyethyleneterephthalate (PETP) and polyethyleneterephthalateglycol (PETG) can be processed as thermoplastic polyester.

Mentioned and other characteristics of the method for manufacturing a base material from recycled plastic and the obtained base material will be further elucidated hereinafter with reference to a number of embodiments which are only given by way of example without the present invention being limited thereto.

### Example 1.

A packaging foil based on polypropylene and provided on one side with a layer of ethylenevinylalcohol copolymer (EVOH) was ground to an average particle size of 4 mm. Because the ground material possessed a sufficiently low moisture content, the drying step was omitted and extrusion took place at conventional pressure and a temperature of 190-220°C.

A base material was formed in the shape of a hollow cylinder with an internal diameter of 67 mm, and a wall thickness of 6 mm ± 0.2 mm.

### Example 2.

A packaging foil based on polystyrene, consisting of two outer polystyrene layers having enclosed therebetween a layer of EVOH and thermoplastic polyester (polyethyleneterephthalateglycol, PETG), was ground to an average particle size smaller than 5 mm. The ground plastic contained 92-94% polystyrene, 3% EVOH and 3-5% PETG.

After drying at 70°C for 24 hours, the dried, ground material was extruded at conventional pressure and a temperature of 220-230°C to a hollow cylinder of the dimensions described above.

### Example 3.

Waste from a packaging foil of the same type as in example 2 was used. In this case however the layer of PETP was replaced by a layer of polyethylene (4-5% by weight).

This waste was processed in the same way as the waste in example 2 and moulded into a similar cylinder.

### Example 4.

The same type of plastic foil waste was used as in example 3, except that this foil was provided with an aluminium foil on one of its surfaces. This foil contained 10% by weight aluminium, 3% EVOH, 4-5% polyethylene and the remainder was polystyrene.

After drying this ground material (average particle size 4 mm) was admixed to the material for extrusion from example 2 in a quantity of about 32% by weight.

After extrusion and moulding in the above described manner a base material in the form of a winding core was obtained. This contained metal particles in a quantity of 3% by weight.

### Example 5.

Plastic foil waste consisting of a trilaminate with polystyrene (97% by weight) as outer layers and an intermediate layer of EVOH (3% by weight) was ground and dried in the manner described above. This ground plastic was mixed with dried, ground plastic of example 4 containing up to 40% by weight of the aluminium particles.

In this case a plate material was manufactured with a thickness of 9 ± 0.2 mm.

### Example 6.

A packaging foil based on polystyrene, consisting of two outer polystyrene layers having enclosed therebetween a layer of polyethylene and a layer of EVOH was ground to an average particle size smaller than 5 mm. The ground plastic contained 76% polystyrene, 4% EVOH and 20% polyethylene.

After drying at 70°C for 24 hours the dried, ground material was extruded at conventional pressure and a temperature of 220-230°C to a hollow cylinder with the above described dimensions.

Hollow cylinders which were manufactured in the examples 1-6 were subjected to a number of mechanical tests. The cylinders were found to have a pressure strength of 1,500 N and the variation in the wall thickness lay below ± 0.2 mm. The surface of the base materials is flat and sufficiently even for use as winding core on expansion shafts and for all types of base/construction materials.

## Claims

1. Method for manufacturing from recycled plastic a base material based on polystyrene or polypropylene, comprising of:
i)
reducing recycled plastic based on polystyrene or polypropylene, which contains 0.1-10 % by weight of ethylenevinylalcohol copolymer (EVOH), to an average particle size smaller than 5 mm;
ii)
drying the reduced plastic;
iii)
extruding and degassing the dried, reduced plastic; and
iv)
moulding to the base material with a wall thickness smaller than 15 mm.

2. Method as claimed in claim 1, wherein the recycled plastic contains a metal foil such as aluminium foil and, prior to extrusion, reduced, dried plastic containing metal particles is admixed in a quantity smaller than 50% by weight.

3. Method as claimed in claim 2, wherein plastic containing metal particles is admixed up to a quantity of 40% by weight, preferably to 30% by weight.

4. Method as claimed in claims 1-3, wherein the recycled plastic is reduced to an average particle size smaller than 4 mm.

5. Method as claimed in claims 1-4, wherein the wall thickness of the moulded base material is smaller than or equal to 12 mm.

6. Method as claimed in claims 1-5, wherein the base material takes the form of a construction board, a rod or a tube.

7. Method as claimed in claim 6, wherein the base material takes the form of a winding core.

8. Base material of recycled plastic based on polystyrene or polypropylene, containing:
a) a composition of:
i)
0.1-10% by weight of ethylenevinylalcohol copolymer (EVOH);
ii)
0-10% by weight of thermoplastic polyester;
iii)
0-30% by weight of polyethylene; and
iv)
0-5% by weight of metal particles with an average particle size smaller than 5 mm; and
b) a wall thickness smaller than 15 mm.

9. Material as claimed in claim 8, with a composition of:
i)
0.1-5% by weight of ethylenevinylalcohol copolymer (EVOH);
ii)
0-5% by weight of thermoplastic polyester;
iii)
0-25% by weight of polyethylene; and
iv)
0-3% by weight of metal particles with an average particle size smaller than 5 mm; and a wall thickness smaller than 15 mm.

10. Material as claimed in claim 8 or 9, containing 1-3% by weight of metal particles with an average particle size smaller than 5 mm.

11. Base material as claimed in claims 8-10, wherein the metal particles are aluminium particles.

12. Material as claimed in claims 8-11 in the form of a winding core with a wall thickness smaller than 12 mm.
